# EUROPÄISCHE PATENTANMELDUNG

(11) **EP 0 976 938 A2**
(43) Veröffentlichungstag der Anmeldung: **02.02.2000**
(21) Anmeldenummer: 99810605.8
(22) Anmeldetag: 08.07.1999
(51) Int. Cl.: F16C 27/02, F16C 33/10

(54) **Radiallager mit viskoser Dämpfung**

(30) Priorität: 29.07.1998 DE 19834111
(71) Anmelder: Asea Brown Boveri AG, 5401 Baden (CH)
(72) Erfinder: Bättig, Josef, 5504 Egliswil (CH)
(74) Vertreter: Liebe, Rainer

(57) **Zusammenfassung**

Die Erfindung betrifft ein Radiallager für die Wellen schnellaufender Rotoren. Aufgabe der Erfindung ist es, eine einfache und damit kostengünstige Zentrierung von Quetschöldämpfern für schnellaufende Rotoren, mit verbessertem Langzeitverhalten, geringem Bauraumbedarf und ausreichender Konzentrizitätsgenauigkeit zu schaffen.
Erfindungsgemäss wird dies dadurch erreicht, dass das Zentrierelement (13) den Ringspalt (12) in zwei Teilringspalte (14, 15) unterteilt, wobei das Lagergehäuse (2) zumindest zweiteilig ausgebildet ist und ein erster Lagergehäuseteil (10) den ersten Teilringspalt (14) sowie ein zweiter Lagergehäuseteil (11) den zweiten Teilringspalt (15) nach radial aussen begrenzt.

## Beschreibung

### Technisches Gebiet

Die Erfindung betrifft ein Radiallager für die Wellen schnellaufender Rotoren, gemäss dem Oberbegriff des Anspruchs 1.

### Stand der Technik

Auf schnellaufende Rotoren, wie beispielsweise die Wellen von Turboladern, wirken grosse Axial- und Radialkräfte ein, welche von entsprechend ausgebildeten und angeordneten Axial- bzw. Radiallagern aufgenommen werden. Zudem müssen für einen störungsfreien Betrieb auch die radialen Rotorschwingungen kompensiert werden. Dazu werden bei Turbomaschinen sogenannte Quetschöldämpfer eingesetzt, welche die Amplitude der auftretenden Rotorschwingungen verringern. Ein solcher Quetschöldämpfer besteht im wesentlichen aus einem zwischen einer Lagerbüchse und einem Lagergehäuse ausgebildeten Ringspalt, der mit einer Ölzuführung verbunden ist. Weil die Lagerbüchse zudem wellenseitig von einem hydrodynamischen Schmierfilm abgestützt ist, wird sie häufig auch als Schwimmbüchse bezeichnet. Bei nicht rotierenden Schwimmbüchsen ergibt sich vor allem bei schweren Rotoren das Problem, dass die Schwimmbüchse im Betrieb nicht zentriert wird. Sie liegt vielmehr im unteren Bereich der sie aufnehmenden Bohrung auf. Dies führt einerseits zu schlechteren Dämpfungseigenschaften und andererseits zum Verschleiss der entsprechenden Bauteile.

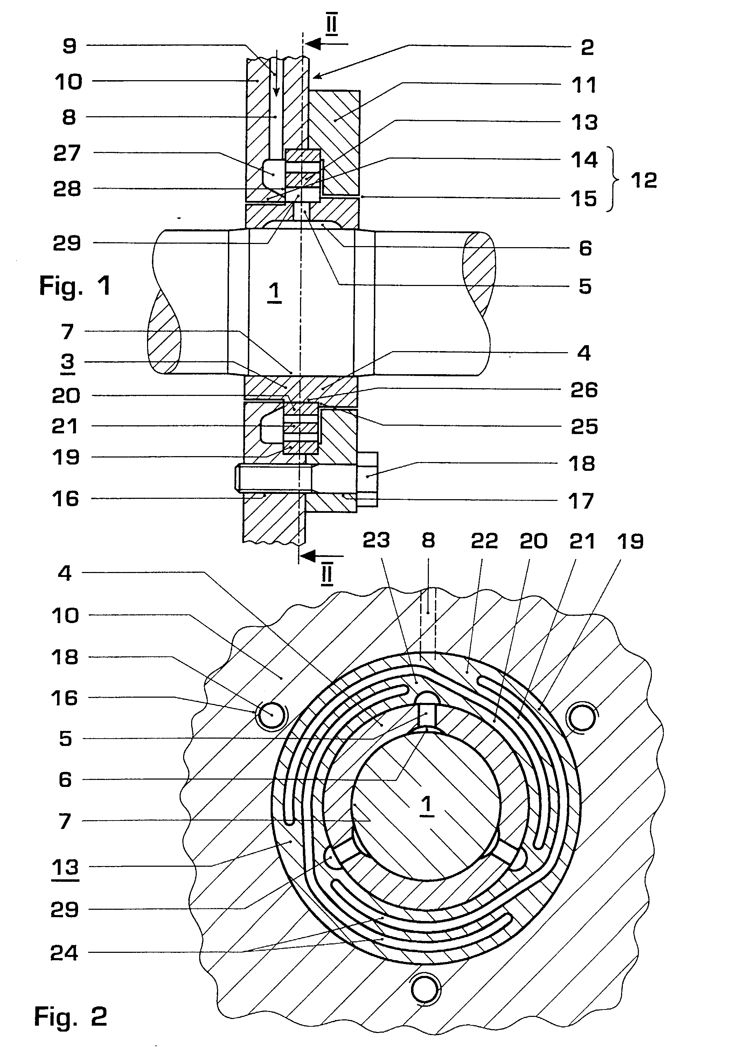

Zur Vermeidung dieser Nachteile sind zahlreiche Möglichkeiten zur Zentrierung eines Quetschöldämpfers bekannt (s. Artikel ,,Application of Squeeze Film Dampers", von F. Y. Zeidan, in Turbomachinery International, September/October 1995, S. 51, Fig. 2-4). Es sind dies die O-Ring-Zentrierung im axialen Bereich des Quetschöldämpfers, die Zentrierung mittels eines seitlichen Federstabkäfigs sowie mittels radial und lokal am Umfang angeordneter Blattfedern. Eine weitere Zentrierung von Quetschöldämpfem mittels radial ausserhalb angeordneter Biegestäbe ist aus dem Artikel "Linear Force Coefficients for Squeeze-Film Dampers", von A. Z. Seri et al, in Transactions of the ASME, S.326, Vol. 105, July 1983, bekannt.

Nachteilig bei der O-Ring-Zentrierung ist jedoch, dass diese eine nichtlineare Federkennlinie und ein unbefriedigendes Langzeitverhalten aufweist, während beim Federstabkäfig axial sehr viel Bauraum erforderlich ist. Demgegenüber benötigen die Biegestäbe radial viel Platz und verursachen aufgrund der vielen Einzelteile hohe Kosten sowie eine unbefriedigende Konzentrizitätsgenauigkeit. Die Blattfeder-Lösung, welche radial ebenfalls viel Platz erfordert, kann nur im Drahterodierverfahren hergestellt werden. Zudem besteht in diesem Fall die Gefahr einer wellenseitigen Deformation der Lagerbüchse.

Verschleissfreie Zentrierelemente für Zentrifugalmaschinen mit vertikaler angeordneter Welle sind als solche bereits seit längerem bekannt (US 3,950,964), wurden jedoch bisher nicht zur Zentrierung von Quetschöldämpfern und nicht bei Turbomaschinen und deren schnellaufenden Rotoren eingesetzt.

### Darstellung der Erfindung

Die Erfindung versucht alle diese Nachteile zu vermeiden. Ihr liegt die Aufgabe zugrunde, eine einfache und damit kostengünstige Zentrierung von Quetschöldämpfern für schnellaufende Rotoren, mit verbessertem Langzeitverhalten, geringem Bauraumbedarf und ausreichender Konzentrizitätsgenauigkeit zu schaffen.

Erfindungsgemäss wird dies dadurch erreicht, dass bei einer Vorrichtung gemäss dem Oberbegriff des Anspruchs 1, das Zentrierelement den Ringspalt in zwei separate Teilringspalte unterteilt. Das Lagergehäuse ist zumindest zweiteilig ausgebildet. Ein erster Lagergehäuseteil begrenzt den ersten und ein zweiter Lagergehäuseteil den zweiten Teilringspalt nach radial aussen.

Aufgrund der Aufteilung des bisher bekannten Quetschöldämpfers in zwei Teilringspalte stehen nunmehr über die axiale Länge der Lagerbüchse bzw. des Radiallagers zwei separate Quetschöldämpfer zur Verfügung, deren Zentrierung durch das zwischen ihnen angeordnete Zentrierelement deutlich verbessert werden kann. Dadurch kommt es zu einer Erhöhung der Dämpfungseigenschaften, d.h. zu einer verbesserten Kompensation der radialen Rotorschwingungen und andererseits zur Verringerung des Verschleisses der benachbarten Bauteile.

Besonders vorteilhaft wird das Zentrierelement zumindest annähernd mittig zwischen den beiden Teilringspalten angeordnet. Damit kann ein Verkippen der Lagerbüchse unter Radiallast verhindert werden.

Zudem ist es zweckmässig, ein in radialer Richtung einteilig ausgebildetes Zentrierelement mit einer linearen Federkennlinie einzusetzen, wodurch ein verschleissfreies Zentrierelement mit definierter linearer Federsteifigkeit realisiert werden kann. Als besonders geeignet hat sich ein Zentrierelement erwiesen, welches aus einem Aussenring, einem Innenring sowie aus mehreren Biegestäben besteht. Dabei weist jeder Biegestab ein mit dem Aussenring und ein mit dem Innenring fest verbundenes Stabende auf und ist in radialer Richtung durch jeweils einen Umfangsschlitz vom Aussen- bzw. vom Innenring getrennt. Ein solches ringförmiges Zentrierelement benötigt sowohl axial als auch radial relativ wenig Bauraum und kann mittels Drahterodieren aus einem Werkstück gefertigt oder im Feingussverfahren hergestellt werden.

Beim Betrieb einer mit einem erfindungsgemässen Radiallager ausgestatteten, schnellaufende Turbomaschine, bleiben das Lagergehäuse und der Aussenring des Zentrierelementes in ihrer vorgegebenen Lage. Dagegen können sich die Biegestäbe und mit ihnen der Innenring im Rahmen der vom Material des Zentrierelementes vorgegebenen Grenzen relativ frei bewegen, so dass sich die Lagerbüchse und damit letztlich die Welle der Turbomaschine im Lagergehäuse sowohl in axiale als auch in radiale Richtung in bestimmten Grenzen beliebig verschieben kann. Auf diese Weise wird eine automatische Zentrierung des Quetschöldämpfers und damit der Welle erreicht, wodurch eine ständige Anpassung an die auftretenden Betriebsbedingungen möglich ist.

Ferner ist es vorteilhaft, wenn die Stabenden der Biegestäbe in Richtung des mit ihnen verbundenen Aussen- oder Innenrings kontinuierlich verdickt ausgebildet sind. Dadurch können die Spannungen an den Stabenden, d.h. Kerbwirkungen sowie Biegespannungen, reduziert werden.

Alternativ zu einem mit Biegestäben ausgestatteten Zentrierelement kann auch ein mit einem Kardanring versehenes Zentrierelement verwendet werden. Dabei ist sowohl zwischen dem Kardanring und dem Aussenring als auch zwischen dem Kardanring und dem Innenring jeweils ein Umfangsschlitz ausgebildet. Der Kardanring ist über zwei innere sowie zwei äussere, den jeweiligen Umfangsschlitz unterbrechende Stege mit dem Innenring bzw. dem Aussenring verbunden. Mit einer solchen Lösung kann im Prinzip eine ähnlich vorteilhafte Wirkung wie bei Verwendung des mit Biegestäben ausgestatteten Zentrierelementes erreicht werden. Allerdings wird dazu radial etwas mehr Bauraum benötigt.

Das Zentrierelement kann sowohl als ein separates Bauteil ausgebildet als auch Bestandteil des Lagergehäuses oder der Lagerbüchse sein. Bei der Entscheidung für eine dieser Varianten muss zwischen den Herstellungkosten und der erforderlichen Genauigkeit abgewogen werden.

Es ist besonders zweckmässig, wenn die beiden Teilringspalte nach aussen abgedichtet sind, so dass der Quetschöldämpfer einen relativ geringen Ölverbrauch besitzt. Natürlich ist die Dämpfungsfunktion auch ohne Dichtelemente gewährleistet.

### Kurze Beschreibung der Zeichnung

In der Zeichnung sind mehrere Ausführungsbeispiele der Erfindung anhand des Radiallagers für die Welle eines Abgasturboladers dargestellt.

Es zeigen:
- Fig. 1: einen Teillängsschnitt im Bereich des Radiallagers;
- Fig. 2: einen Schnitt durch das Lagergehäuse, entlang der Linie II-II in Fig. 1;
- Fig. 3: eine Darstellung gemäss Fig. 1, jedoch in einem zweiten Ausführungsbeispiel;
- Fig. 4: eine Darstellung gemäss Fig. 1, jedoch in einem dritten Ausführungsbeispiel;
- Fig. 5: eine Darstellung gemäss Fig. 1, jedoch in einem vierten Ausführungsbeispiel;
- Fig. 6: eine Darstellung gemäss Fig. 2, jedoch in einem weiteren Ausführungsbeispiel.

Es sind nur die für das Verständnis der Erfindung wesentlichen Elemente gezeigt. Nicht dargestellt sind beispielsweise der Verdichter und die Turbine des Abgasturboladers. Die Strömungsrichtung des Arbeitsmittels ist mit Pfeilen bezeichnet.

### Weg zur Ausführung der Erfindung

Der Abgasturbolader besteht im wesentlichen aus einem Rotor, mit einem Verdichterrad, einem Turbinenrad und einer gemeinsamen Welle 1 sowie aus einem Verdichtergehäuse, einem Turbinengehäuse und jeweils einem verdichterseitigen bzw. einem turbinenseitigen Lagergehäuse 2. Die Lagerung der Welle 1 weist sowohl verdichter- als auch turbinenseitig jeweils ein Radiallager 3 auf, welche hauptsächlich aus jeweils einer Lagerbüchse 4, einer diese durchdringenden Versorgungsbohrung 5, einer Lagertasche 6 und einem Lagerspalt 7 bestehen. Die Radiallager 3 sind mit jeweils einer im Lagergehäuse 2 angeordneten Zuführbohrung 8 für Schmieröl 9 verbunden. In der Figur 1 ist ein Teillängsschnitt im Bereich des auf der Verdichterseite eines Abgasturboladers angeordneten Radiallagers 3 dargestellt.

Das Lagergehäuse 2 besteht aus einem ersten Lagergehäuseteil 10, welcher die Zuführbohrung 8 aufnimmt und aus einem zweiten, als Gehäusedeckel ausgebildeten Lagergehäuseteil 11. Zwischen dem Lagergehäuse 2 und der Lagerbüchse 4 ist ein als Ringspalt ausgebildeter Quetschöldämpfer 12 angeordnet. Der Ringspalt 12 wird in seinem axialen Bereich von einem in etwa mittig angeordneten Zentrierelement 13 in zwei Teilringspalte 14, 15 unterteilt, wobei der erste Lagergehäuseteil 10 den ersten Teilringspalt 14 und der Gehäusedeckel 11 den zweiten Teilringspalt 15 nach radial aussen begrenzt. Im ersten Lagergehäuseteil 10 ist eine Gewindebohrung 16 und im Gehäusedeckel 11 eine mit dieser korrespondierende Bohrung 17 angeordnet, welche eine entsprechende Verbindungsschraube 18 für den lösbaren Gehäusedeckel 11 aufnehmen.

In einem ersten Ausführungsbeispiel besteht das Zentrierelement 13 aus einem Aussenring 19, einem Innenring 20 sowie aus drei Biegestäben 21, wobei jeder Biegestab 21 ein mit dem Aussenring 19 und ein mit dem Innenring 20 fest verbundenes Stabende 22, 23 aufweist und in radialer Richtung durch jeweils einen Umfangsschlitz 24 vom Aussen- bzw. vom Innenring 19, 20 getrennt ist (Fig. 2). Die Biegestäbe 21 weisen über ihre gesamte Länge eine gleichmässige Stabdicke auf. Natürlich können die Stabenden 22, 23 der Biegestäbe 21 in Richtung des mit ihnen verbundenen Aussen- oder Innenrings 19, 20 auch mit Vorteil kontinuierlich verdickt ausgebildet sein (nicht dargestellt).

Die Fertigung des Zentrierelementes 13 kann mittels Drahterodieren aus einem Werkstück erfolgen. Bei entsprechend grosser Schlitzbreite der Umfangsschlitze 24, kann das Zentrierelement 13 vorteilhaft auch in Feinguss realisiert werden. Natürlich kann das Zentrierelement 13 bei bestimmten Ausführungsvarianten auch aussermittig des Ringspalts 12 angeordnet sein, so dass die beiden Teilringspalte 14, 15 eine unterschiedliche axiale Erstreckung aufweisen. Auch kann eine andere Anzahl von Biegestäben 21 verwendet werden. Ebenso ist es möglich, mehrere Zentrierelemente 13 axial nebeneinander anzuordnen oder ein axial geteiltes Zentrierelement 13 zu verwenden (nicht dargestellt).

Wie in Fig. 1 gezeigt, ist das Zentrierelement 13 als ein separates Bauteil ausgebildet. Dabei ist die Lagerbüchse 4 aus Montagegründen mit drei verschiedenen Aussendurchmessern ausgestattet, so dass ein mit einem Anschlag 25 versehener, definierter Aufnahmebereich 26 für das Zentrierelement 13 entsteht. Vor der Montage der Lagerbüchse 4 wird das ringförmige Zentrierelement 13 bis zum Anschlag 25 auf den vorgesehenen Aufnahmebereich 26 gepresst, so dass eine kraftschlüssige Verbindung entsteht. Danach wird das Zentrierelement 13 und somit auch die Lagerbüchse 4 in das erste Lagergehäuseteil 10 eingepresst und schliesslich der Gehäusedeckel 11 befestigt. Selbstverständlich kann die Lagerbüchse 4 auch mit einem einheitlichen Aussendurchmesser versehen sein, wobei in diesem Fall eine stoffschlüssige Befestigung des Zentrierelementes 13 möglich ist.

Beim Betrieb des Abgasturboladers werden die Welle 1 und die sie aufnehmenden Radiallager 3 entsprechend der konkreten Betriebssituation mit unterschiedlichen Axial- und Radialkräften belastet. Zudem treten wechselnde radiale Rotorschwingungen auf, welche durch den Quetschöldämpfer 12 kompensiert werden. Dabei übernimmt das eine lineare Federkennlinie aufweisende und in radialer Richtung einteilig ausgebildete Zentrierelement 13 die Zentrierung der Lagerbüchse 4 und damit des Quetschöldämpfers 12. Auf diese Weise kann ein Kontakt der Lagerbüchse 4 sowohl mit dem ersten Lagergehäuseteil 10 als auch mit dem Gehäusedeckel 11 vermieden werden. Dabei ist es für die Funktion des Zentrierelementes 13 von besonderer Bedeutung, dass zwischen der Lagerbüchse 4 und dem Innenring 20 des Zentrierelementes 13 keinerlei Relativbewegung stattfindet. Die auftretenden Kräfte werden vielmehr von den Biegestäben 21 aufgenommen, welche sich in bestimmten Grenzen sowohl in axialer als auch in radialer Richtung frei bewegen können. Trotz feststehendem Lagergehäuse 2 und Aussenring 19 des Zentrierelementes 13 können sich somit die Welle 1, die Lagerbüchse 4 und der Innenring des Zentrierelementes 13 entsprechend dem konkreten Betriebszustand des Abgasturboladers anpassen, d.h. beliebig verschieben. Infolge der mittigen Anordnung des Zentrierelementes 13 im Ringspalt 12 kann ein Verkippen der Lagerbüchse 4 unter Radiallast verhindert werden

Die Versorgung des Quetschöldämpfers 12, d.h. des ersten und des zweiten Teilringspaltes 14, 15, mit dem Schmieröl 9 erfolgt über die mit einem nicht dargestellten Ölbehälter verbundene Zuführbohrung 8. Dazu endet letztere radial innen in einer Ringnut 27, welche eine Öffnung 28 zu einer Axialnut 29 des Zentrierelementes 13 aufweist. Jeweils eine solche Axialnut 29 ist im Bereich des inneren Stabendes 23 der Biegestäbe 21 im Innenring 20 angeordnet. Demnach gelangt das Schmieröl 9 über die Axialnuten 29 in den Quetschöldämpfer 12. Schliesslich sind die Axialnuten 29 über die die Lagerbüchse 4 durchdringenden Versorgungsbohrungen 5 und die Lagertasche 6 auch mit dem Lagerspalt 7 verbunden, so dass sie gleichzeitig der Schmierölversorgung des Radiallagers 3 dienen.

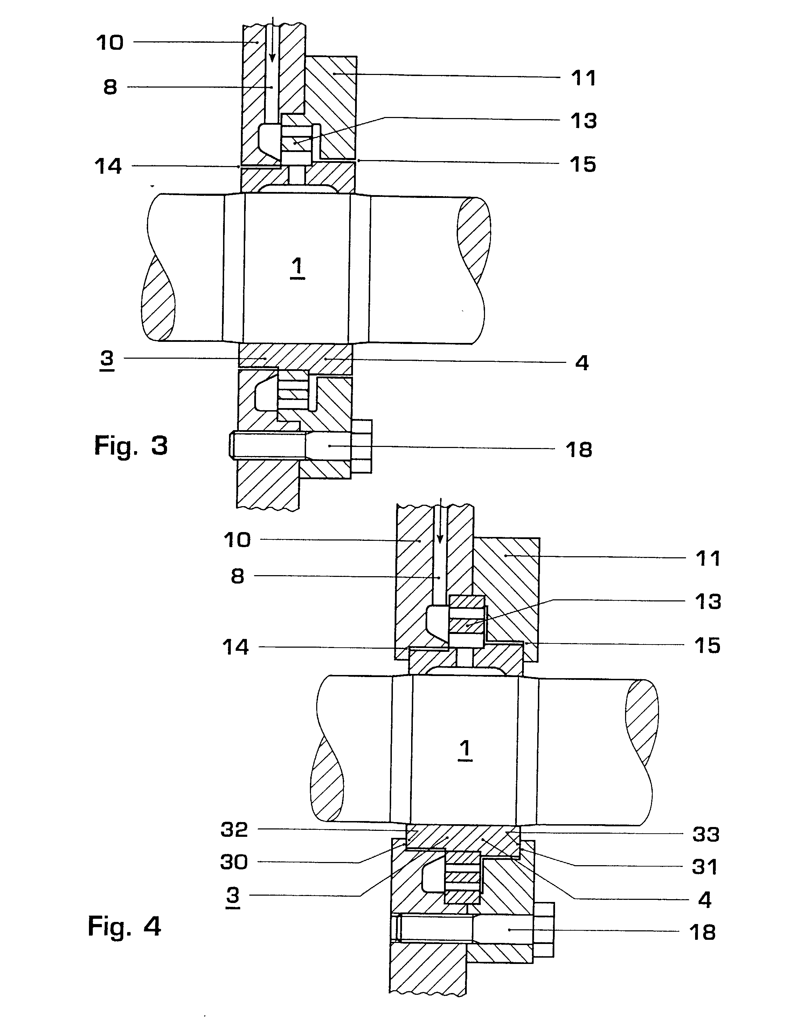

In einem zweiten Ausführungsbeispiel ist das Zentrierelement 13 in den Gehäusedeckel 11 integriert (Fig. 3). Bei gleicher Funktion wie im ersten Ausführungsbeispiel wird mit dieser Lösung die Anzahl der verwendeten Bauteile reduziert und zudem die Montage vereinfacht. Natürlich kann das Zentrierelement 13 auch Bestandteil des ersten Lagergehäuseteils 10 oder der Lagerbüchse 4 sein (nicht dargestellt). In diesem Fall erfolgt seine Montage gemeinsam mit dem jeweiligen Bauteil.

Gemäss einem dritten Ausführungsbeispiel überlappen sowohl das erste Lagergehäuseteil 10 als auch der Gehäusedeckel 11 die Lagerbüchse 4 axial und bilden beidseitig jeweils eine passgenaue Gehäuseschulter 30, 31 zu einer entsprechenden Schulter 32, 33 der Lagerbüchse 4 (Fig. 4). Damit werden die beiden Teilringspalte 14, 15 nach aussen abgedichtet, so dass der Quetschöldämpfer 12 nicht ständig Schmieröl 9 an die ausserhalb des Radiallagers 3 befindlichen Bereiche der Welle 1 verliert. Auf diese Weise kann unter Beibehaltung des Wirkprinzips des Zentrierelementes 13 die Funktion des Quetschöldämpfers 12 stabilisiert und die für Dämpfungszwecke verwendete Ölmenge reduziert werden.

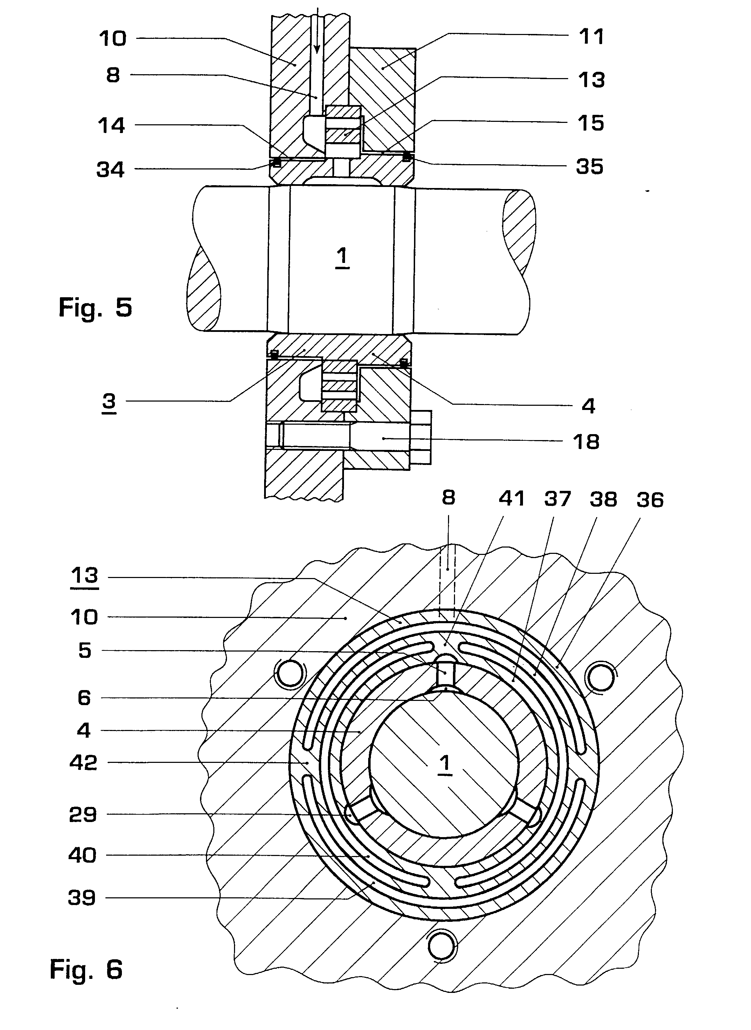

Bei einem vierten Ausführungsbeispiel ist sowohl im ersten als auch im zweiten Teilringspalt 14, 15 jeweils ein ringförmiges Dichtelement 34, 35 angeordnet (Fig. 5). Beide Dichtelemente 34, 35 übernehmen im wesentlichen die gleiche Funktion wie die Gehäuseschultern 30, 31 im zuvor beschriebenen Ausführungsbeispiel.

In einem weiteren Ausführungsbeispiel besteht das Zentrierelement 13 aus einem Aussenring 36, einem Innenring 37 sowie aus einem Kardanring 38. Sowohl zwischen dem Kardanring 38 und dem Aussenring 36 als auch zwischen dem Kardanring 38 und dem Innenring 37 ist jeweils ein Umfangsschlitz 39, 40 ausgebildet. Der Kardanring 38 ist über zwei innere sowie zwei äussere, den jeweiligen Umfangsschlitz 40, 39 unterbrechende Stege 41, 42 mit dem Innenring 37 bzw. dem Aussenring 36 verbunden (Fig. 6). Diese Alternativlösung ist im wesentlichen gleichwirkend zum ersten Ausführungsbeispiel und kann vor allem bei Anwendungsfällen zum Einsatz kommen, bei denen eine erhöhte axiale Steife des Zentrierelementes 13 erforderlich ist.

### Bezugszeichenliste

- 1: Welle
- 2: Lagergehäuse
- 3: Radiallager
- 4: Lagerbüchse
- 5: Versorgungsbohrung
- 6: Lagertasche
- 7: Lagerspalt
- 8: Zuführbohrung
- 9: Schmieröl
- 10: erster Lagergehäuseteil
- 11: zweiter Lagergehäuseteil, Gehäusedeckel
- 12: Quetschöldämpfer, Ringspalt
- 13: Zentrierelement
- 14: erster Teilringspalt
- 15: zweiter Teilringspalt
- 16: Gewindebohrung
- 17: Bohrung
- 18: Verbindungsschraube
- 19: Aussenring
- 20: Innenring
- 21: Biegestab
- 22: Stabende, verbunden mit 19
- 23: Stabende, verbunden mit 20
- 24: Umfangsschlitz
- 25: Anschlag
- 26: Aufnahmebereich
- 27: Ringnut
- 28: Öffnung
- 29: Axialnut
- 30: Gehäuseschulter, von 10
- 31: Gehäuseschulter, von 11
- 32: Schulter, von 4
- 33: Schulter, von 4
- 34: Dichtelement
- 35: Dichtelement
- 36: Aussenring
- 37: Innenring
- 38: Kardanring
- 39: Umfangsschlitz
- 40: Umfangsschlitz
- 41: Steg
- 42: Steg

## Patentansprüche

1. Radiallager für die Wellen schnellaufender Rotoren, mit einem Quetschöldämpfer, welcher aus einem mit einer Ölzuführung verbundenen und zwischen einer Lagerbüchse sowie einem Lagergehäuse des Radiallagers ausgebildeten Ringspalt besteht und ein im axialen Bereich des Quetschöldämpfers angeordnetes Zentrierelement aufweist, dadurch gekennzeichnet, dass das Zentrierelement (13) den Ringspalt (12) in zwei Teilringspalte (14, 15) unterteilt, wobei das Lagergehäuse (2) zumindest zweiteilig ausgebildet ist und ein erster Lagergehäuseteil (10) den ersten Teilringspalt (14) sowie ein zweiter Lagergehäuseteil (11) den zweiten Teilringspalt (15) nach radial aussen begrenzt.

2. Radiallager nach Anspruch 1, dadurch gekennzeichnet, dass das Zentrierelement (13) zumindest annähernd mittig zwischen den beiden Teilringspalten (14, 15) angeordnet ist.

3. Radiallager nach Anspruch 1 oder 2, dadurch gekennzeichnet, dass das Zentrierelement (13) eine lineare Federkennlinie aufweist und in radialer Richtung einteilig ausgebildet ist.

4. Radiallager nach Anspruch 3, dadurch gekennzeichnet, dass das Zentrierelement (13) aus einem Aussenring (19), einem Innenring (20) sowie aus mehreren Biegestäben (21) besteht, wobei jeder Biegestab (21) ein mit dem Aussenring (19) und ein mit dem Innenring (20) fest verbundenes Stabende (22, 23) aufweist und in radialer Richtung durch jeweils einen Umfangsschlitz (24) vom Aussen- bzw. vom Innenring (19, 20) getrennt ist.

5. Radiallager nach Anspruch 4, dadurch gekennzeichnet, dass die Stabenden (22, 23) der Biegestäbe (21) in Richtung des mit ihnen verbundenen Aussen- oder Innenrings (19, 20) kontinuierlich verdickt ausgebildet sind.

6. Radiallager nach Anspruch 3, dadurch gekennzeichnet, dass das Zentrierelement (13) aus einem Aussenring (36), einem Innenring (37) sowie aus einem Kardanring (38) besteht, wobei sowohl zwischen dem Kardanring (38) und dem Aussenring (36) als auch zwischen dem Kardanring (38) und dem Innenring (37) jeweils ein Umfangsschlitz (39, 40) ausgebildet ist, der Kardanring (38) über zwei innere sowie zwei äussere, den jeweiligen Umfangsschlitz (39, 40) unterbrechende Stege (41, 42) mit dem Aussenring (36) bzw. dem Innenring (37) verbunden ist.

7. Radiallager nach einem der Ansprüche 1 bis 6, dadurch gekennzeichnet, dass das Zentrierelement (13) als ein separates Bauteil ausgebildet oder aber Bestandteil des ersten Lagergehäuseteils (10), des zweiten Lagergehäuseteils (11) oder der Lagerbüchse (4) ist.

8. Radiallager nach einem der Ansprüche 1 bis 7, dadurch gekennzeichnet, dass sowohl der erste als auch der zweite Lagergehäuseteil (10, 11) eine dem jeweiligen Teilringspalt (14, 15) benachbarte Gehäuseschulter (30, 31) aufweisen und jede der beiden Gehäuseschultern (30, 31) dichtend an einer entsprechenden Schulter (32, 33) der Lagerbüchse (4) anliegt.

9. Radiallager nach einem der Ansprüche 1 bis 7, dadurch gekennzeichnet, dass sowohl im ersten als auch im zweiten Teilringspalt (14, 15) ein Dichtelement (34, 35) angeordnet ist.
